Europäisches Patentamt

European Patent Office

Office européen des brevets

(19)

(11) Numéro de publication: **0 267 864**
**B1**

(12) **FASCICULE DE BREVET EUROPEEN**

(45) Date de publication du fascicule du brevet:
**11.10.89**

(21) Numéro de dépôt: **87460016.6**

(22) Date de dépôt: **22.10.87**

(51) Int. Cl.⁴: **A47J 36/16,** A23C 9/154,
B01F 15/00

(54) **Dispositif de traitement thermique et procédé de mise en oeuvre de celui-ci dans une application à la préparation de confiture de lait.**

(30) Priorité: **28.10.86 FR 8615099**

(43) Date de publication de la demande:
**18.05.88 Bulletin 88/20**

(45) Mention de la délivrance du brevet:
**11.10.89 Bulletin 89/41**

(84) Etats contractants désignés:
**AT BE CH DE ES FR GB GR IT LI LU NL SE**

(56) Documents cités:
**EP-A- 0 046 477**
**EP-A- 0 049 229**
**WO-A-82/04385**
**DE-A- 2 627 460**
**FR-A- 921 118**
**FR-A- 1 068 489**
**FR-A- 1 147 040**
**GB-A- 2 116 059**
**US-A- 2 027 756**
**US-A- 3 432 642**
**US-A- 4 199 266**

(73) Titulaire: **C.A.T.( Centre d'Aide par le Travail), Le Bois Jumel, F-56910 Carentoir(FR)**

(72) Inventeur: **Le Floch, Maurice, Le Chêne Milan,
F-35600 Redon(FR)**
Inventeur: **Le Maux, Robert, 3 Impasse Descartes,
F-22600 Loudeac(FR)**
Inventeur: **Temey, Serges, 27 rue du Paradet,
F-35600 Redon(FR)**
Inventeur: **Denoual, Michel, Le Commé,
F-56130 Tehillac(FR)**

(74) Mandataire: **Dubreuil, Annie, Cabinet DUBREUIL Le Suffren 23 rue des Peupliers, F-56100 Lorient(FR)**

## Description

L'invention concerne un dispositif et son environnement, destiné au traitement d'un produit obtenu à partir d'un mélange de lait et de sucre à la manière d'une confiture.

Un procédé d'obtention d'un tel produit est déjà décrit dans une demande de brevet n° 8506378 déposée par le demandeur. La mise en oeuvre d'un tel procédé peut conduire à certaines difficultés, notamment au niveau de la structure de la cuve de cuisson et de la rigueur des cycles thermiques à respecter : ainsi, pour obtenir l'effet d'oxydation du lait recherché (effet Maillard), l'architecture de l'agitateur joue un rôle fondamental.

La présente invention a donc pour objet un dispositif de traitement thermique comportant une cuve destinée à recevoir un mélange de lait et de sucre et coopérant avec des moyens de chauffage capables d'élever la température de ce mélange et de réguler cette température en fonction d'un cycle déterminé ; dispositif dans lequel la cuve (3) est constituée d'une paroi cylindrique raccordée à un fond en forme de calotte sphérique ; cette cuve (3) étant, d'une part, équipée d'un agitateur (4) dont la structure est adaptée pour accomplir deux fonctions : l'une d'homogénéiser, l'autre de racler en permanence à la fois toute la surface de la paroi cylindrique ainsi que toute la surface de la calotte sphérique et, d'autre part, de moyens (18,19) permettant l'évacuation rapide du produit en fin de traitement.

Un tel dispositif est connu par exemple du document EP-A 049 229.

L'invention est caractérisé par le fait que l'agitateur comprend une armature principale (40) en forme de U, équipée d'une première paroi (42) placée à l'intérieur de cette armature (40), solidaire à chacune de ses extrémités des deux branches du U et surmontée d'un déflecteur (43) formé de deux parois s'étendant en V de port et d'autre du plan de la première paroi (42), l'ensemble de la paroi (42) et du deflecteur (43) se présentant en coupe sous la forme d'un Y, architecture qui permet durant tout le traitement de rabattre le produit sans altérer les molécules de l'air. L'invention cocerne aussi un procédé de mise en œuvre de ce dispositif caractérisé en ce qu'il consiste à utiliser le dispositif selon les étapes suivantes:

– avant chargement, à amener les parois de la cuve (3) à une température voisine de 70°C;
– à charger la cuve avec le concentrat de protéines et à mettre immédiatement l'agitateur (4) en marche à une vitesse de rotation comprise entre 20 et 25 tours par minute
– à réchauffer aussi rapidement que possible le concentrat à une température voisine de 50°C;
– à poursuivre le chauffage et à effectuer l'apport en sucre cristallisé dès que la température du concentrat atteint la température de 65°C, cette température devant être obtenue dans un délai de 30 minutes environ après l'opération de chargement;
– à poursuivre le chauffage puis à maintenir la température du mélange constante entre 95 et 98°C sous agitation;

– à effectuer à cette température, un apport de sucre inverti trois heures après l'apport du sucre cristallisé;
– à maintenir la température jusqu'à environ cinq heures après le chargement;
– à vider rapidement la cuve en fin de traitement, le Ph de la préparation étant controlé et corrigé, si nécessair, dés le début de l'opération et au moins une fois toutes les heures, pour être maintenu entre 6,5 et 7.

L'invention sera mieux comprise à l'aide des explications qui vont suivre et des figures jointes parmi lesquelles:

– la figure 1 représente une vue en coupe de la cuve et de son agitateur, objets de l'invention.
– la figure 2 est une vue en perspective de l'agitateur dans la cuve, à partir d'une coupe AA de la figure 1;
– la figure 3 montre la cuve, objet de l'invention, coopérant avec des moyens périphériques conduisant à la mise en oeuvre du procédé selon l'invention.

Pour plus de clarté, les mêmes éléments portent les mêmes références dans toutes les figures.

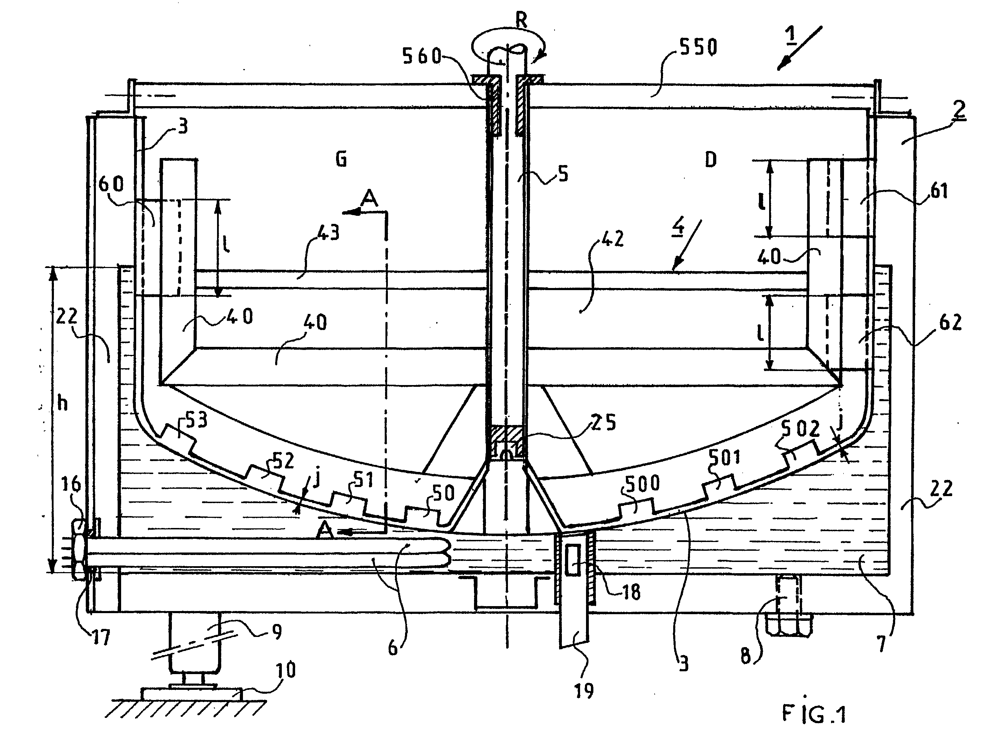

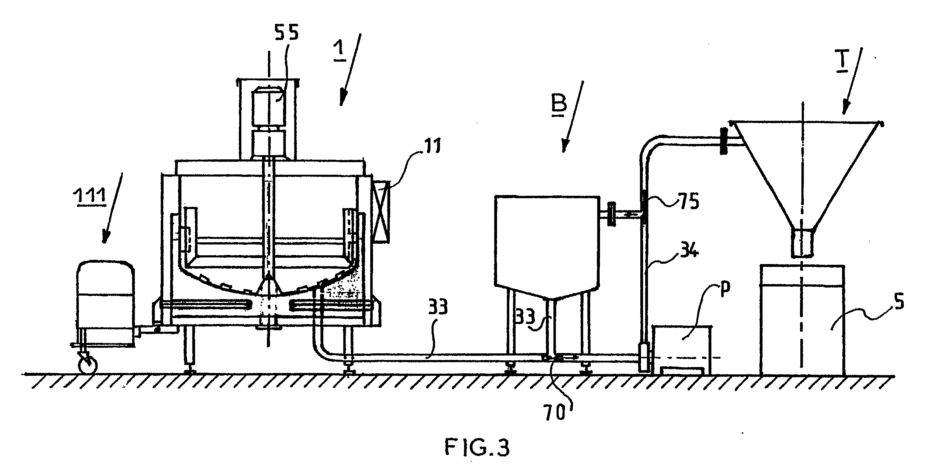

Comme le montre la figure 1, le dispositif (1) de traitement thermique du lait et du sucre est constitué d'un caisson étanche (2) dans lequel est disposée une cuve (3), munie d'un agitateur (4) qui tourne selon le sens de rotation R, autour d'un arbre (5) vertical entraîné par un moteur (55) non représenté sur cette figure mais visible sur la figure 3. Ce moteur repose sur un berceau (550) posé en travers de la cuve (3). Le palier supérieur (560) de l'arbre (5) est solidaire de ce berceau (550).

Le caisson étanche (2) est constitué d'un bâti cylindrique dont les parois latérales (22) sont isolées thermiquement, par exemple, par de la laine de roche. Dans le fond du caisson (2) est placée une pluralité de thermoplongeurs (6), par exemple six, répartis tous les 60°. Les connecteurs (16) de ces thermoplongeurs sortent du caisson (2) par des manchons étanches (17). Les thermoplongeurs (6) sont immergés dans un bain d'huile (7) qui occupe tout le volume enveloppant la cuve(3) sur une hauteur (h) supéreure au niveau utile atteint par le produit en cours de traitement, dans la cuve (3).

Ce mode de chauffage par bain d'huile (7) et régulé par thermoplongeurs (6) tel que réprésenté sur la figure 1 n'est pas limitatif et tout autre moyen connu susceptible de fournir un chauffage efficace et une régulation souple de la température peut être utilisé.

Dans le fond du caisson (2), un tube de vidange d'huile (8) est aménagé. Enfin, traversant d'une manière étanche le caisson (2) et solidaire de la cuve (3), un système d'évacuation du produit est prévu. Il s'agit d'une combinaison de vannes (18) et de tubes (19) qui sortent du fond du caisson (2). Ces tubes d'évacuation sont raccordés à l'installation placée en aval de la cuve (3) comme schématisé sur la figure 3. Une seule vanne est représentée sur la figure mais ce nombre peut être de deux, trois, quatre, (n). Le profil (pf) de la surface blocante de chaque vanne épouse parfaitement le profil du fond de la cuve.

L'ensemble caisson (2) et cuve (3) est soutenu par des pieds (9) réglables qui reposent sur des supports antivibratoires (10).

Dans le caisson (2) repose donc la cuve (3) en acier inoxydable ; cette cuve (3), conformément à l'invention, est cylindrique et son fond se présente sous la forme d'une calotte sphérique. La partie extérieure de la cuve (3) est en contact avec l'huile (7) contenue dans le caisson (2) alors que l'intérieur reçoit le produit à traiter. La température du produit en cours de cuisson est mesurée en permanence par un thermostat (35) non représenté.

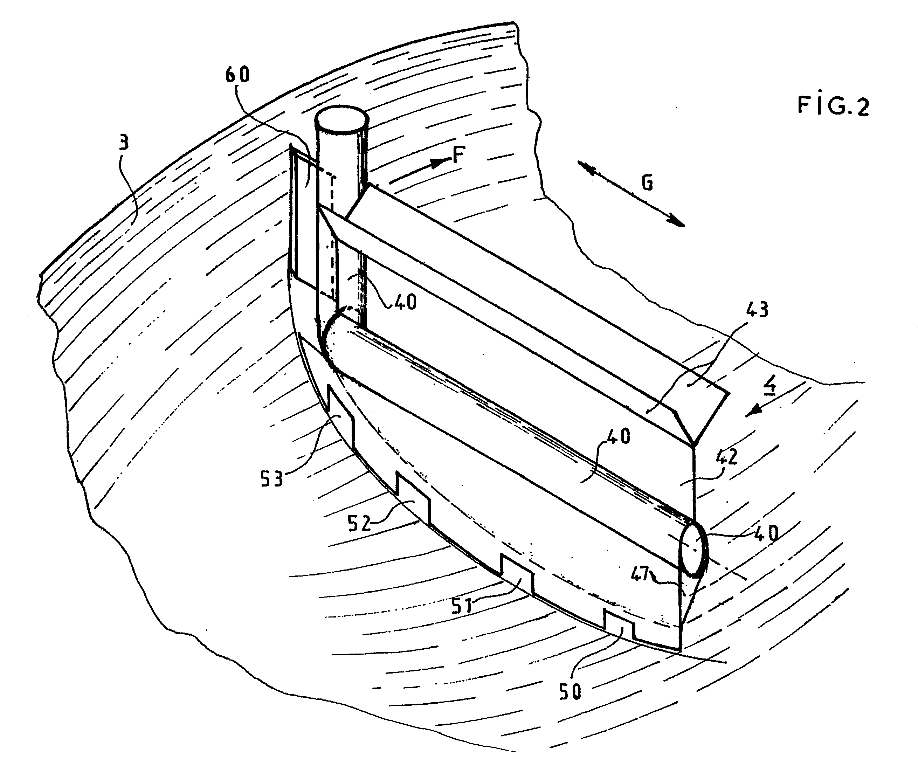

Une des caractéristiques essentielles de l'invention concerne l'agitateur (4) qui est illustré sur la figure 2 vue en perspective à partir de la coupe (AA) de la figure 1. Cette caractéristique réside dans le fait que l'agitateur accomplit une double fonction, celle d'agitation d'une part, et d'autre part celle de racleur du fond et des parois de la cuve (3) pendant l'opération de cuisson. Il est constitué d'une armature principale (40) en U allongé, réalisée en tube d'acier inoxydable. Rejoignant à l'intérieur du U les deux branches verticales de celui-ci, une paroi (42) en tôle d'acier inoxydable est surmontée d'un déflecteur (43) également en acier inoxydable réalisé en forme de V formant donc avec la paroi (42) un Y. Cette forme particulière de ce déflecteur (43) permet de rabattre le "rouleau" de produit que a tendance à prendre forme pendant l'agitation sans qu'il y ait de choc indésirable au niveau des molécules du lait. Pour améliorer encore cet effet, ce déflecteur peut comporter un rabat supplémentaire à chacune de ses extrémités. En dessous de la branche horizontale de l'armature principale (40), verticalement sur toute la longueur de celle-ci, est fixée tangentiellement sur le tube horizontal de l'armature (40), une paroi constituée d'un segment circulaire (44) rigidifié par un raidisseur (47).

Selon une autre caractéristique importante de l'invention, le profil circulaire de cette paroi (44) épouse parfaitement le profil en calotte sphérique du fond de la cuve (3) afin de favoriser un raclage optimal sans laisser de pellicule stagnante de produit au fond de la cuve (3) pendant la cuisson. Un jeu (j) faible est maintenu entre le fond de la cuve (3) et la base du segment circulaire (44) de l'agitateur (4) par l'appui de son axe central (5) sur une butée (25) qui assure en même temps le bon centrage de l'agitateur (4) dans la cuve (3).

Néanmoins, afin de favoriser le brassage du produit dans le fond de celle-ci sans effort excessif sur l'agitateur (4) tout en assurant le parfait balayage du fond de la cuve (3), une pluralité d'ouvertures, par exemple rectangulaires, sont pratiquées sur la périphérie du segment (44) comme on peut le voir sur la figure 2. La forme de ces ouvertures est optimisée en fonction de l'application considérée.

Une autre caractéristique importante de l'invention réside dans le fait qu'afin d'assurer simultanément le brassage du produit et le raclage du fond de la cuve (3) pour éviter la brûlure du produit, les ouvertures, par exemple rectangulaires, (50, 51, 52...) pratiquées dans la moitié gauche (G) -vu sur le dessin par rapport à l'axe d'entraînement de l'agitateur (4)- ne sont pas en concordance avec celles (500, 501, 502...) pratiquées dans la moitié droite de l'agitateur (D par exemple) comme on peut le voir sur la figure 1. La partie (D) n'est pas représentée sur la fig. 2. Il en résulte qu'à chaque demi-tour de l'agitateur (4) une zone de fond de cuve (3) complémentaire de la précédente se trouve immédiatement raclée par le passage de la partie (D), ce qui évite la prise au fond et la brûlure du produit en cours de cuisson, la partie gauche (G) étant raclée au demi-tour suivant.

Enfin, pour éviter le même phénomène de brûlure sur les parois verticales de la cuve, un système de racleurs est de plus installé sur chacune des branches verticales du U formant l'armature principale (40). Comme on peut le voir sur les figures 1 et 2, la branche verticale de l'armature principale (40) de l'agitateur (4) est équipée dans sa partie (G) d'un seul racleur (60) de longueur (L), qui est placé sensiblement au milieu de la hauteur de cette branche verticale. En revanche, et afin d'assurer un balayage permanent de toute la surface interne de la partie cylindrique de la cuve, la branche verticale opposée, dans la partie (D) de l'agitateur (4), est équipée de deux racleurs (61 & 62) qui encadrent en haut et en bas la surface balayée par le racleur opposé (60). Grâce à cette combinaison de moyens, comme le fond de la cuve, la paroi cylindrique est, en cours de cuisson, en permanence et totalement balayée, ce qui évite tout risque de prise du produit sur cette paroi et donc de brûlure. Pour tenir compte de l'usure des racleurs et de leur éventuel remplacement, les racleurs (60, 61, 62) sont démontables et réglables.

Comme on peut le voir sur la figure 3, le récipient de traitement thermique (1) décrit précédemment est alimenté élecriquement et contrôlé par une armoire (11). Une plate-forme (111) permet de surveiller l'ensemble pendant le déroulement des différentes étapes de mise en oeuvre du procédé selon l'invention. Un couvercle (non représenté) recouvre la cuve.

Cet ensemble est placé en amont d'un bac tampon (B) et d'une trémie doseuse (T). La présence du bac tampon (B) relié à la cuve (3) via la ou les vannes (18) et le ou les tubes (19) prolongés par une tuyauterie (33) est justifiée par le fait qu'à la fin de la cuisson, l'évacuation du produit doit se faire d'une manière aussi rapide que possible. Une présence trop longue du produit fini dans la cuve (3) à la fin de la cuisson conduirait à la décomposition du produit. Il est donc indispensable, après une évacuation rapide de la cuve (3) de récupérer le produit dans ce récipient qu'est le bac tampon B, dans le cas où le conditionnement ne peut suivre assez vite.

Néanmoins, si la quantité fabriquée est faible et si, de ce fait, l'usage du bac tampon B s'avère inutile, il peut être courtcircuité au moyen d'une vanne (70). Le produit est alors acheminé directement dans la trémie doseuse T. Une pompe (P) reliée au couple -bac tampon (B) et trémie (T)- par une canalisation (34) assure cette fonction. En revanche, dans le cas où, pour une raison quelconque, telle qu'un bouchage ou un trop-plein de la trémie doseuse (T), le produit est alors dérivé vers le bac tampon (B) grâce à la vanne (75) placée sur le circuit (34). Enfin, à la sortie (5) de la trémie doseuse (T), le produit peut être conditionné dans les récipients appropriés, selon une technique classique.

Les principales étapes du procédé de préparation d'une confiture de lait mettant en oeuvre le récipient et l'installation conforme à l'invention sont maintenant décrites.

Durant une étape préalable au chargement dans la cuve (3), le lait est, comme cela a été décrit dans la demande de brevet référencée ci-dessus, concentré par ultrafiltration ou par procédé thermique. Le demandeur a constaté en effet que le temps de cuisson est inversement proportionnelle au taux de filtration, il en résulte donc, soit un gain de temps pour une quantité de lait déterminée, soit pour un temps donné (t), un gain en quantité de lait traité. On peut donc ainsi envisager la mise en oeuvre de grandes quantités de lait de base, sans faire appel, comme dans la fabrication traditionnelle, à des cuves de dimensioxagérées. On a coutume d'appeler X2, X3, X4, X5, ...Xn, un volume de lait après ultrafiltration. Ce volume correspond alors à 2 litres effectifs de lait pour X2, 3 litres pour X3, 4 litres pour X4, 5 litres pour X5 et n litres pour Xn. Ainsi, si l'on traite 200 litres de X5, on traite en réalité 1 000 litres du lait initial. Or, ce qui limite actuellement l'utilisation de lait extrêmement concentré résulte uniquement de la difficulté de transporter un tel produit par suite des risques d'augmentation d'acidité.

En revanche, cet obstacle est surmonté si l'on peut pratiquer l'ultrafiltration sur les lieux mêmes de fabrication du produit selon l'invention, d'où l'intérêt de coupler à une installation d'ultrafiltration, éventuellement déjà existante pour d'autres applications, un dispositif de traitement thermique selon l'invention.

On parle plus volontiers d'un retentat de protéines parce que cette méthode (non décrite ici car faisant partie de l'art connu) conduit à une récupération des protéines du lait. De plus, grâce à ce procédé, une bonne partie des sucres (lactose) se trouve éliminée.

Le concentrat de protéines est donc prêt à être mis dans la cuve (3) selon l'invention et à subir le traitement thermique. Plusieurs étapes sont alors à prévoir.

Une première étape consiste à chauffer la cuve (3) vingt à trente minutes avant le chargement de telle sorte que les parois de la cuve soient à une température voisine de 70°C. Lorsque cette condition est remplie, on dépose alors le concentrat, préalablement ultrafiltré et maintenu à une température de 4°C, dans la cuve (3) préchauffée et on met immédiatement l'agitateur (4) en action. La vitesse de rotation de ce dernier, qui tourne par exemple dans le sens des aiguilles d'une montre est de l'ordre de 20 à 25 tours par minute.

Tout est mis en oeuvre pour obtenir un réchauffage rapide du concentrat qui doit atteindre très vite une température supérieure à 50°C.

Après quelques tours d'agitateur, dès que le concentrat est bien mélangé, on prélève un échantillon pour une mesure d'acidité Dornic et de Ph. on ajuste alors ce Ph qui doit rester compris entre 6,5 et 7, par addition de bicarbonate. Ce contrôle est refait régulièrement et en tout état de cause au moins une fois toutes les heures.

Environ une demi-heure après le chargement, dès que le concentrat atteint une température supérieure à 65°C, on effectue l'apport de sucre cristallisé.

La cuisson se poursuit sous agitation constante avec raclage permanent des parois et du fond de la cuve grâce à la structure de l'agitateur (4) conforme à l'invention.

Au bout des deux heures qui suivent le chargement, on procède, le cas échéant, à l'apport du parfum choisi (chocolat, noix de coco,etc.). La température du mélange est alors comprise et maintenue constante entre 95 et 98°C. Si le parfum est volatile, il ne sera introduit dans la préparation qu'au dernier moment.

Trois heures après l'apport du sucre cristallisé, on procéde à l'apport du sucre inverti qui conduit à l'obtention de la couleur recherchée. Cet apport se fait soit directement, soit en faisant appel à un pré-mélange.

Cinq heures après le chargement, la cuisson est terminée ou sur le point de l'être. Pour avoir la confirmation que le traitement est fini et que le produit élaboré est prêt à être conditionné, on procède à un test au refractomètre ou à un test dit de la goutte dans l'eau.

On procède alors à l'évacuation du produit soit directement vers l'équipement de dosage et de conditionnement, soit vers le réservoir tampon(B), comme cela a été expliqué précédemment.

On obtient ainsi, grâce à la technique de l'ultrafiltration et à la cuisson sous agitation et le raclage dans une cuve conforme à l'invention, une confiture de lait de très bonne qualité gustative et de conservation, et ceci de manière répétitive et fiable.

**Revendications**

1. Dispositif de traitement thermique comportant une cuve destinée à recevoir un mélange de lait et de sucre et coopérant avec des moyens de chauffage capables d'élever la température de ce mélange et de réguler cette température en fonction d'un cycle déterminé; dispositif dans lequel la cuve (3) est constituée d'une paroi dylindrique raccordée à un fond en forme de calotte sphérique; cette cuve (3) étant, d'une part, équipée d'un agitateur (4) dont la structure est adaptée pour accomplir deux fonctions: l'une de remuer constamment le mélange en cours de cuisson pour l'homogénéiser, l'autre de racler en permanence à la fois toute la surface de la paroi cylindrique ainsi que toute la surface de la calotte sphérique et, d'autre part, de moyens (18, 19) permettant l'évacuation rapide du produit en fin de traitement. Caractérisé en ce que l'agitateur comprend une armature principale (40) en forme de U, équipée d'une première paroi (42) placée à l'intérieur de cette armature (40), solidaire à chacune de ses extrémités des deux branches du U, et surmontée d'un déflecteur (43) formé de deux parois s'étendant en V de part et d'autre du plan de la première paroi (42), l'ensemble de la paroi (42) et du déflecteur (43) se présentant en coupe sous la forme d'un Y, architecture qui permet durant tout le traitement de rabattre le produit sans altérer les molécules de lait.

2. Dispositif selon l'une des revendications 1; caractérisé en ce que la branche horizontale de l'armature principale (40) porte, disposée à l'opposéde la première paroi (42) portant le déflecteur (43), une paroi constituée d'un segment circulaire (44) qui épouse le profil de la calotte sphérique constituant le fond de la cuve (3) en ne laissant subsister qu'un faible jeu (j).

3. Dispositif selon l'une des revendications précédentes; caractérisé en ce que des ouvertures (50, 51, ..., 500,501,..) sont pratiquées sur la périphérie de ce segment circulaire (44), ouvertures dont la fonction est de faciliter le mouvement de l'agitateur (4). Les ouvertures (50, 51...) pratiquées d'un côté du segment circulaire (44) pris par rapport à l'axe de rotation de l'agitateur n'étant pas en concordance avec les ouvertures (500, 501...) pratiquées de l'autre côté de cet axe mais étant décalées les unes par rapport aux autres de telle sorte que toute la calotte sphérique se trouve raclée à chaque tour de l'agitateur malgré la présence de ces ouvertures.

4. Dispositif selon la revendication 3; caractérisé en ce que ces ouvertures (50, 51...500, 501..) sont rectangulaires.

5. Dispositif selon l'une des revendications précédentes; caractérisé en ce que les branches de l'armature principale (40) de l'agitateur (4) portent un système de racleurs dont la fonction est de lécher la surface cylindrique de la cuve (3).

6. Dispositif selon la revendication 5; caractérisé en ce que l'une des branches que de l'armature porte un seul racleur (60) de longueur (L) tandis que l'autre branche porte deux racleurs (61, 62) encadrant, vu dans l'espace, le racleur (60) de telle sorte que toute la surface cylindrique est soumise à une action de raclage à chaque tour de l'agitateur (4).

7. Dispositif selon l'une des revendications précédentes; caractérisé en ce que les moyens de chauffage sont constitués par un caisson étanche (2) contenant un bain d'huile (7) dans lequel repose la cuve (3), le bain d'huile étant par une pluralité de thermoplongeurs (6).

8. Dispositif selon l'une des revendications précédentes; caractérisé en ce que les moyens d'évacuation du produit de la cuve (3) sont constitués d'au moins une vanne (18) et d'au moins une canalisation (19) reliée à une trémie (T) de dosage, soit directement, soit par l'intermédiaire d'un bac tampon (B).

9. Procédé de mise en oeuvre d'un dispositif de traitement thermique selon l'une des revendications précédentes: caractérisé en ce qu'il consiste à utiliser le dispositif selon les étapes suivantes:
– avant chargement à amener les parois de la cuve (3) à une température voisine de 70°C;
– à charger la cuve avec le concentrat de protéines et à mettre immédiatement l'agitateur (4) en marche à vitesse de rotation comprise entre 20 et 25 tours par minute.

– à rechauffer aussi rapidement que possible le concentrat à une température voisine de 50°;
– à poursuivre le chauffage et à effectuer l'apport en sucre cristallisé dès que la température du concentrat atteint la tempéature de 65°C, cette température devant être obtenue dans un délai de 30 minutes environ après l'opération de chargement;
– à poursuivre le chauffage puis à maintenir la température du mélange constante entre 95 et 98°C sous agitation;
– à effectuer, à cette température, un apport de sucre inverti trois heures après l'apport du sucre cristallisé;
– à maintenir la température jusqu'à environ cinq heures après le chargement;
– à vider rapidement la cuve en fin de traitement, le Ph de la préparation étant contrôlé et corrigé, si nécessaire, dès le début de l'opération et au moins une fois toutes les heures, pour être maintenu entre 6,5 et 7.

## Claims

1. A heat treatment device comprising a vat intended to receive a mixture of milk and sugar and co-operating with heating means able to raise the temperature of this mixture and to control this temperature as a function of a specified cycle; being a device in which the vat (3) is formed by a cylindrical wall joined to a base in the form of a spheroidal cap; this vat (3) being provided on the one hand with a stirrer (4) of which the structure is adapted to fulfil two functions: the one being to stir continuously the mixture in the process of being cooked to homogenise it, the other being to scrape permanently and simultaneously the whole surface of the cylindrical wall as well as the whole surface of the spheroidal cap and, on the other hand, with means (18, 19) allowing rapid discharge of the product at the end of the treatment, characterized in that the stirrer (4) comprises a U-shaped main frame (40) provided with a first wall (42) situated within this frame (40), joined at both of its ends to the two branches of the U and topped by a deflector (43) formed by two walls extending in a V-shape on each side of the plane of the first wall (42), the whole of the wall (42) and of the deflector (43) appearing in the form of a Y in cross-section, which construction allows the product to settle throughout the treatment without altering the milk molecules.

2. A device according to claim 1, characterized in that the horizontal branch of the main frame (40) carries, arranged opposite to the first wall (42) carrying the deflector (43), a wall formed by a circular segment (44) which matches the outline of the spheroidal cap forming the bottom of the vat (3) whilst leaving upon only a small clearance (j).

3. A device according to one of the preceding claims, characterized in that openings (50, 51, ........, 500, 501, .....) are formed in the periphery of this circular segment (44), the function of which openings is to facilitate the displacement of the stirrer (4), the openings (50, 51...) formed on one side of the circular segment (44) relative to its axis of rotation not being in congruence with the openings (500, 501...) formed on the other side of this axis but being offset from one another in such a way that the whole spheroidal cap is scraped during each revolution of the stirrer despite the presence of these openings.

4. A device according to claim 3, characterized in that these openings (50, 51, ...500, 501..) are rectangular.

5. A device according to one of the preceding claims, characterized in that the branches of the main frame (40) of the stirrer (4) carry a system of scrapers the function of which is to sweep the cylindrical surface of the vat (3).

6. A device according to claim 5, characterized in that one of the branches of the frame carries a single scraper (60) of length (L) whereas the other branch carries two scrapers (61, 62) flanking the scraper (6), as seen spatially, in such a way that the whole of the cylindrical surface is subjected to a scraping action during each revolution of the stirrer (4).

7. A device according to one of the preceding claims, characterized in that the heating means are formed by a sealed housing (2) containing an oil bath (7) in which the vat (3) rests, the oil bath being heated by a plurality of immersion heaters (6).

8. A device according to one of the preceding claims, characterized in that the means for discharging the product from the vat (3) are constituted by at least one sluice valve (18) and at least one duct (19) connected to a metering hopper (T) either directly or via a buffer tank (B).

9. A method of operating a heat treatment device according to one of the preceding claims, characterized in that it consists in utilising the device in accordance with the following steps:
   – prior to loading, bringing the walls of the vat (3) to a temperature close to 70°C,
   – loading the vat with the concentrate of proteins and setting the stirrer (4) in motion immediately at a rotational speed between 20 and 25 r.p.m.,
   – heating the concentrate as rapidly as possible to a temperature close to 50°C,
   – continuing the heating and performing the infeed of crystallized sugar as soon as the temperature of the concentrate reaches the temperature of 65°C, this temperature having to be reached within a period of approximately 30 minutes following the loading operation,
   – continuing the heating operation and then keeping the temperature of the mixture constant at between 95 and 98°C whilst stirring,
   – effecting an infeed of invert sugar at this temperature, three hours after the infeed of the chrystallized sugar,
   – maintaining the temperature until the end of cooking approximately five hours after the loading operation,
   – emptying the vat rapidly at the end of the treatment, the pH of the product being monitored and corrected, if necessary, immediately from the onset of the operation and at least once an hour to keep it between 6.5 and 7.

## Patentansprüche

1. Vorrichtung zur Wärmebehandlung, mit einem Behälter, der dazu bestimmt ist, ein Gemisch aus Milch und Zucker aufzunehmen, und mit Heizmitteln zusammenwirkt, welche in der Lage sind, die Temperatur dieses Gemisches zu erhöhen sowie diese Temperatur in Abhängigkeit von einem bestimmten Zyklus zu regeln; Vorrichtung, in welcher der Behälter (3) aus einer zylindrischen Wand gebildet ist, die mit einem als Kugelkappe geformten Boden verbunden ist; wobei dieser Behälter (3) einerseits mit einem Rührwerk (4), dessen Struktur so eingerichtet ist, daß sie zwei Funktionen erfüllt: erstens das gerade garende Gemisch dauernd zu rühren, um es zu homogenisieren, und zweitens sowohl die gesamte Fläche der zylindrischen Wand als auch die gesamte Fläche der Kugelkappe dauernd abzuschaben, und andererseits mit Mitteln (18, 19) versehen ist, welche die schnelle Abfuhr des Produktes am Ende der Behandlung ermöglichen, dadurch gekennzeichnet, daß das Rührwerk (4) eine U-förmige Hauptarmatur (40) umfaßt, die mit einer ersten Wand (42) versehen ist, welche im Inneren dieser Armatur (40) untergebracht ist und am jedem ihrer Enden mit beiden Schenkeln des U fest verbunden ist sowie von einem Ablenkteil (43) überragt ist, das aus zwei Wänden gebildet ist, welche sich beiderseits der Ebene der ersten Wand (42) V-förmig erstrecken, wobei der Komplex Wand (42) und Ablenkteil (43) im Schnitt eine Y-Form aufweist und dieser Aufbau während der gesamten Behandlung es ermöglicht, das Produkt umzuschlagen, ohne die Milchmoleküle zu beeinträchtigen.

2. Vorrichtung nach Anspruch 1, dadurch gekennzeichnet, daß der waagerechte Schenkel der Hauptarmatur (40) eine Wand trägt, die gegenüber der ersten, das Ablenkteil (43) tragenden Wand (42) angeordnet ist und aus einem Kreissegment (44) besteht, welches sich an das Profil der den Boden des Behälters (3) bildenden Kugelkappe anschmiegt und dabei nur ein geringes Spiel (j) übrig läßt.

3. Vorrichtung nach einem der vorstehenden Ansprüche, dadurch gekennzeichnet, daß Öffnungen (50, 51, ... 500, 501...) am Umfang des Kreissegmentes (44) angebracht sind, deren Funktion darin besteht, die Bewegung des Rührwerkes (4) zu erleichtern, wobei die Öffnungen (50, 51...), die auf einer Seite des Kreissegmentes (44) angebracht sind, das in Bezug auf die Rotationsachse des Rührwerkes betrachtet wird, mit den auf der anderen Seite dieser Achse angebrachten Öffnungen (500, 501...) nicht übereinstimmen, sondern die einen in Bezug auf die anderen versetzt sind, so daß die gesamte Kugelkappe bei jeder Umdrehung des Rührwerkes abgeschabt wird, trotz des Vorhandenseins dieser Öffnungen.

4. Vorrichtung nach Anspruch 3, dadurch gekennzeichnet, daß die Öffnungen (50, 51..., 500, 501...) rechteckig sind.

5. Vorrichtung nach einem der vorstehenden Ansprüche, dadurch gekennzeichnet, daß die Schenkel der Hauptarmatur (40) des Rührwerkes (4) ein Schabersystem tragen, dessen Funktion darin besteht, über die zylindrische Fläche des Behälters (3) zu streifen.

6. Vorrichtung nach Anspruch 5, dadurch gekennzeichnet, daß einer der Armaturschenkel einen einzigen Schaber einer Länge (L) trägt, während der andere Schenkel zwei Schaber (61, 62) trägt, welche – im Raum betrachtet – den Schaber (60) so einrahmen, daß die gesamte zylindrische Fläche bei jeder Umdrehung des Rührwerkes (4) einer Abschabwirkung ausgesetzt ist.

7. Vorrichtung nach einem der vorstehenden Ansprüche, dadurch gekennzeichnet, daß die Heizmittel aus einem dichten Kasten (2) bestehen, der ein Ölbad (7) enthält, in welchem der Behälter (3) liegt, wobei das Ölbad durch eine Vielzahl von Thermotauchern (6) erhitzt wird.

8. Vorrichtung nach einem der vorstehenden Ansprüche, dadurch gekennzeichnet, daß die Mittel zur Abfuhr des Produktes aus dem Behälter (3) aus wenigstens einem Schieber (18) sowie aus wenigstens einer Leitung (19) bestehen, die mit einem Dosiertrichter (T) entweder unmittelbar, oder mittels einer Pufferwanne (B) verbunden ist.

9. Verfahren zur Anwendung einer Vorrichtung für eine Wärmebehandlung nach einem der vorstehenden Ansprüche, dadurch gekennzeichnet, daß es darin besteht, die Vorrichtung gemäß den folgenden Schritten anzuwenden:

– die Wände des Behälters (3) vor dem Beschicken auf eine Temperatur zu bringen, die ca. 70°C beträgt;

– den Behälter mit dem Proteinenkonzentrat zu beschicken und das Rührwerk (4) unmittelbar mit einer Drehgeschwindigkeit einzuschalten, welche zwischen 20 und 25 Umdrehungen pro Minute beträgt;

– das Konzentrat auf eine Temperatur von ca. 50°C so schnell wie möglich zu erwärmen;

– das Heizen anzuhalten und die Zufuhr mit Kristallzucker vorzunehmen, sobald die Temperatur des Konzentrats 65°C erreicht, wobei diese Temperatur nach einer Zeit von ca. 30 Minuten nach dem Beschickungsvorgang erreicht werden muß;

– das Heizen anzuhalten und dann die Temperatur des Gemisches zwischen 95 und 98°C unter Rühren konstant zu halten;

– drei Stunden nach der Zufuhr mit Kristallzucker eine Zufuhr mit Invertzucker bei dieser Temperatur vorzunehmen;

– die Temperatur bis zum Ende des Garprozesses ca. fünf Stunden nach dem Beschicken aufrechtzuhalten;

– am Ende der Behandlung den Behälter schnell zu entleeren, wobei der Ph-Wert des Präparats seit dem Anfang des Vorganges und wenigstens einmal in der Stunde geprüft und wenn nötig korrigiert wird, um zwischen 6,5 und 7 zu bleiben.

FIG.1

FIG.2

EP 0 267 864 B1

FIG.3